# EUROPÄISCHE PATENTSCHRIFT

(11) **EP 2 539 148 B1**
(45) Veröffentlichungstag und Bekanntmachung des Hinweises auf die Patenterteilung: **11.04.2018**
(21) Anmeldenummer: 11709631.3
(22) Anmeldetag: 23.02.2011
(51) Int. Cl.: B32B 27/08, B32B 27/36, B32B 7/02, B29C 47/06, B42D 25/45

(54) **KARTENKÖRPER ENTHALTEND EIN COEXTRUDIERTES FOLIENVERBUNDMATERIAL**
CARD BODIES COMPRISING A COEXTRUDED FILM COMPOSITE MATERIAL
CORPS DE CARTE COMPRENANT UN MATÉRIAU COMPOSITE EN FEUILLE COEXTRUDÉ

(30) Priorität: 25.02.2010 DE 102010009242
(43) Veröffentlichungstag der Anmeldung: 02.01.2013
(73) Patentinhaber: Giesecke+Devrient Mobile Security GmbH, 81677 München (DE)
(72) Erfinder: RIEDL, Josef, 85395 Attenkirchen (DE); BRAUN, Andreas, 80798 München (DE); REGENSBURGER, Cordula, 86938 Schondorf a.A. (DE)
(86) Internationale Anmeldenummer: PCT/EP2011/000880
(87) Internationale Veröffentlichungsnummer: WO 2011/104013

(56) Entgegenhaltungen:
- WO-A1-97/37849
- US-A- 5 089 318
- US-A- 5 914 191
- DATABASE WPI Week 200460 Thomson Scientific, London, GB; AN 2004-618362 XP002637108, -& JP 2004 174970 A (MITSUBISHI KAGAKU POLYESTER FILM KK) 24. Juni 2004 (2004-06-24)
- DATABASE WPI Week 200975 Thomson Scientific, London, GB; AN 2009-Q76371 XP002637109, -& JP 2009 258793 A (SUMITOMO BAKELITE CO LTD) 5. November 2009 (2009-11-05)

## Beschreibung

Die Erfindung betrifft einen Kartenkörper für einen tragbaren Datenträger, der ein Folienverbundmaterial enthält, und ein Verfahren zur Herstellung des Kartenkörpers.

Bei der Fertigung von Kartenkörpern, insbesondere für tragbare Datenträger, wie z.B. Chipkarten, werden mehrere übereinander liegende Kunststofffolien miteinander laminiert. Als Kunststofffolien werden wegen ihrer guten Laminierbarkeit meist thermoplastische Folien verwendet, z.B. Folien aus Polyvinylchlorid, Polycarbonat, Polypropylen, Polyethylenterephthalat oder thermoplastischen Polyurethanen. Ein Nachteil von Kartenkörpern aus der- _ artigen thermoplastischen Folien sind ihre mangelhaften mechanischen Eigenschaften hinsichtlich Biegebeanspruchung und schlagartiger Krafteinwirkung. Es kommt dabei zu Spannungen im Kartenkörper, und schließlich zu Rissen. Auch der Einbau elektronischer Module führt meist zu Spannungen, einer Schwächung des Kartenkörpers, und letztendlich zu einer erhöhten Anfälligkeit für Risse und Brüche.

Zur Verbesserung der mechanischen Eigenschaften solcher Kartenkörper ist es vorteilhaft, im Rahmen des Laminierprozesses Folien aus thermoplastischem Elastomer, beispielsweise auf Urethanbasis, einzusetzen. Diese Folien sind außerordentlich elastisch und können die Biegebeanspruchbarkeit und Bruchfestigkeit des Kartenaufbaus deutlich verbessern. In der Druckschrift EP 0 430 282 A2 ist ein Kartenkörper in der Form einer mehrschichtigen Ausweiskarte beschrieben, bei der zwischen dem Kartenkern und entsprechenden Deckfolien jeweils eine Schicht aus thermoplastischem Elastomer vorgesehen ist.

Die Verarbeitung von Folien aus thermoplastischem Elastomer, sogenannten TPE-Folien, im Rahmen eines Laminierprozesses bei der Herstellung eines Kartenkörpers ist jedoch sehr schwierig. Aufgrund ihrer hohen Elastizität sind die Folien sehr "lappig". Die mangelnde Steifigkeit führt zu Problemen bei der Verarbeitung in den Produktionsmaschinen, und die geringe Dimensionsstabilität kann auch Passerprobleme beim Bedrucken der Folien verursachen. Zusätzlich neigt das Material beim Laminieren zum Verlaufen. Ferner besitzen solche Folien einen niedrigen Glasübergangsbereich, der unter 0°C liegt, wobei es in diesem Temperaturbereich flexibel bleibt und nicht spröde wird. Darüberhinaus neigen die Folien beim Stapeln zu Verblockungen, so dass die Folien im Stapel nur schwer vereinzelt und transportiert werden können. Um beim Laminieren solcher Folien mit anderen Materialien eine ausreichende Verbindungssteifigkeit zu erreichen, ist es zudem erforderlich, den Glaspunkt des jeweils anderen Materials zu erreichen. Da dieser Glaspunkt regelmäßig weit über dem Glasübergangsbereich von thermoplastischen Elastomeren liegt, führt dies in Verbindung mit der Abhängigkeit von der Stärke des Abfalls der Viskosität im entsprechenden Temperaturbereich häufig zum Ausschwimmen des thermoplastischen Elastomers. Dies hat zur Folge, dass die verwendeten Laminiermaschinen oft gereinigt werden müssen. Unter Umständen können sogar die an dem thermoplastischen Elastomer anliegenden Folien ebenfalls zu fließen beginnen, und ein darauf befindliches Druckbild deformieren. Es besteht zwar die Möglichkeit, bei niedrigeren Temperaturen zu laminieren, um hierdurch das Ausschwimmen der Folien zu vermeiden, aber beim Laminieren bei niedrigen Temperaturen wird in der Regel kein ausreichend guter Laminatverbund erreicht.

Es ist daher erstrebenswert, die positiven Eigenschaften von thermoplastischen Folien und von Folien aus thermoplastischem Elastomer in einem einzigen Folienmaterial zu kombinieren. Ein Lösungsansatz in dieser Richtung ist in dem Dokument EP 0 384 252 B1 offenbart. Der darin beschriebene Folienverbundwerkstoff weist eine Vielzahl von Schichten auf, wobei eine mittlere Schicht aus thermoplastischem Elastomer hergestellt ist. An diese Schicht schließen sich Schichten aus thermoplastischen Kunststoffen an. Bei der Herstellung des Verbundwerkstoffs werden auf eine Folie, welche die mittlere Schicht bildet, die weiteren Schichten aufgebracht. Ein Aufbringungsverfahren ist die gemeinsame Extrusion, wobei die Schichten nach dem Verlassen des Extruders zusammengeführt werden.

JP 2009 258793 A beschreibt ein Basismaterial mit einer Zwischenschicht, die ein Polyamidharz enthält, angeordnet zwischen zwei Schichten, die eine Polyesterharzmischung enthalten. Ferner wird eine Identitätskarte beschrieben, die aus dem Basismaterial besteht.

WO 97/37849 A1 beschreibt eine Karte, die aus mehreren Schichten besteht, wobei die Karte ein Polyestersubstrat umfasst.

Im Rahmen der vorliegenden Erfindung wird ein Folienmaterial bereitgestellt, das zur Verwendung als Schicht in einem Kartenkörper geeignet ist. Insbesondere sollte das Folienmaterial im Rahmen der Fertigung eines Kartenkörpers gut verarbeitet werden können und gute mechanische Eigenschaften des Kartenkörpers garantieren. Erwünschte Eigenschaften eines derartigen Folienmaterials sind
- eine hohe Flexibilität, um die gewünschte Biegebeanspruchbarkeit, insbesondere dynamische Biegebeanspruchbarkeit, der Karte zu gewährleisten;
- die Fähigkeit, Spannungen, Risse und Brüche in der Karte zu vermeiden, insbesondere auch beim Einbau von elektronischen Modulen in die Karte;
- eine gute Laminierbarkeit mit gängigen Kartenmaterialien, insbesondere thermoplastischen Folien, bevorzugt ohne Hilfsschichten;
- eine gute Bedruckbarkeit, bevorzugt ohne Druckvorbehandlung;
- eine gute Dimensionsstabilität bei Herstellung und Verarbeitung;
- eine einfache, und bevorzugt preiswerte, Herstellbarkeit;
- eine gute Handhabbarkeit bei der Weiterverarbeitung, insbesondere ein Vermeiden von Verblocken.; sowie
- eine höhere chemische Beständigkeit gegenüber Standardmaterialien.

Aufgabe der vorliegenden Erfindung ist es, einen Kartenkörper für einen tragbaren Datenträger bereitzustellen, der die Nachteile des Stands der Technik vermeidet. Insbesondere sollte der Kartenkörper den Einbau elektronischer Module gut tolerieren und eine gute Resistenz gegenüber Spannungsrissen und Brüchen, beispielsweise bei Biegebeanspruchung und schlagartiger Krafteinwirkung, aufweisen. Diese Aufgabe wird gelöst durch den Kartenkörper und das Verfahren zur Herstellung eines Kartenkörpers, mit den Merkmalen, wie sie in den jeweiligen unabhängigen Ansprüchen angegeben sind. Spezielle Ausführungsformen der vorliegenden Erfindung sind in den abhängigen Ansprüchen angegeben.

Erfindungsgemäß wird ein Folienverbundmaterial bereitgestellt, das drei Schichten aufweist, wobei eine Innenschicht aus einem thermoplastischen Elastomer an ihren beiden Oberflächen von Außenschichten aus thermoplastischem Polymer bedeckt ist. Ein derartiges Folienverbundmaterial vereinigt die vorteilhaften Elastizitätseigenschaften des Elastomers mit den vorteilhaften Eigenschaften des Thermoplasten hinsichtlich Laminierbarkeit und Handhabbarkeit. Die Herstellung eines solchen Verbundmaterials wirft technische Probleme auf, da die verwendeten Materialien und Prozessparameter sorgfältig aufeinander abgestimmt werden müssen, um die gewünschten Folieneigenschaften zu erzielen.

Werden thermoplastisches Polymer und Elastomer separat extrudiert und erst unmittelbar nach dem Verlassen der jeweiligen Extruderdüse zusammengeführt, kann die Haftfestigkeit der Teilschichten aneinander mangelhaft sein, so dass es bei einer Beanspruchung unter Umständen zu einer teilweisen Trennung des Folienverbundmaterials in seine einzelnen Schichten kommt. Erfindungsgemäß werden daher alle verwendeten Materialien noch im geschmolzenen Zustand vor dem Verlassen der Extruderdüse zu dem Folienverbundmaterial zusammengeführt. Erst nach dem Verlassen der Extruderdüse kühlt das Folienverbundmaterial ab und wird fest, das heißt, das Folienverbundmaterial kühlt als Gesamtheit ab und wird fest und bildet so eine sogenannte Koextrusionsfolie. Diese Vorgehensweise erfordert, dass das thermoplastische Kunststoffmaterial und das thermoplastische Elastomer bei der gleichen Temperatur bzw. zumindest innerhalb eines gemeinsamen Temperaturbereichs verarbeitet werden müssen. Thermoplaste haben typischerweise eine etwas höhere Schmelz- bzw. Verarbeitungstemperatur als thermoplastische Elastomere. Werden thermoplastische Elastomere auf typische Verarbeitungstemperaturen von Thermoplasten erhitzt, neigen thermoplastische Elastomere stärker als Thermoplaste zu einem thermischen Abbau, was wiederum eine sinkende Viskosität, und damit einen schlechteren Folienverbund zwischen thermoplastischem Kunststoff und thermoplastischem Elastomer zur Folge hat. Darüber hinaus dürfen sich thermoplastischer Kunststoff und thermoplastisches Elastomer natürlich nicht abstoßen, sie müssen vielmehr miteinander gut verträglich sein und sich miteinander verbinden, damit sie, wenn sie später in einem stark beanspruchten Kartenkörper vorliegen, nicht delaminieren. Vergleichbare rheologische Eigenschaften, d.h. vergleichbare Schmelzeviskositäten, bei Thermoplast und thermoplastischem Elastomer fördern eine homogene Schmelzeüberlagerung und verbessern die Haftfestigkeit der Schichten untereinander.

Neben der sorgfältigen Abstimmung von thermoplastischem Kunststoffmaterial und thermoplastischem Elastomer muss natürlich auch darauf geachtet werden, Extruder zu wählen, deren Schneckengeometrien die Verarbeitung des gewählten Materials erlauben und den jeweils erforderlichen Durchsatz für die gewünschten Schichtdicken ermöglichen. Insbesondere muss ein kontinuierlicher Förderstrom des thermoplastischen Elastomers gewährleistet sein, damit die Gefahr eines thermischen Abbaus und damit der Verschlechterung der rheologischen Eigenschaften des thermoplastischen Elastomers vermieden wird.

Erfindungsgemäß wurde gefunden, dass die Anforderungen an eine Folie, die als Schicht in einem Kartenkörper verwendet werden soll, in optimaler Weise erfüllt werden, wenn die Kunststoff-Innenschicht des Folienverbundmaterials aus einem thermoplastischen Copolyester-Elastomer hergestellt wird, und die beiden Kunststoff-Außenschichten aus einem Polyethylenterephthalat-Glycol-Copolymer (PETG), sogenanntes Glykol modifiziertes Polyethylenterephthalat, hergestellt werden. Dabei ist zu beachten, dass das thermoplastische Copolyester-Elastomer sowie das PETG jeweils nur die Kunststoffmaterialien der Innenschicht bzw. der Außenschichten darstellen. Die Materialien für die Innenschicht bzw. die Außenschichten können neben dem Kunststoffmaterial auch übliche Additive enthalten, beispielsweise Farbpigmente, Oxidationsstabilisatoren, Flammhemmstoffe, optische Aufheller, Füllstoffe, UV-Stabilisatoren, Release-Additive und andere Hilfsstoffe. Farbpigmente können gleichzeitig als Füllstoffe wirken. Auch übliche Extender können enthalten sein, aber bevorzugt sind die Schichten frei von Extendern. Generell wird der Zusatz von Hilfsstoffen bevorzugt gering gehalten, um die Abstimmung der Kunststoffmaterialien möglichst wenig zu stören.

Die beiden Kunststoff-Außenschichten können gleich oder verschieden sein. Die beiden Kunststoff-Außenschichten bestehen zwar beide aus PETG, sie können sich jedoch hinsichtlich des verwendeten PETG-Typs, hinsichtlich ihrer Dicke, oder hinsichtlich ihrer Zusatzstoffe unterscheiden. Beispielsweise könnte eine der Kunststoff-Außenschichten ein Antiblockmittel enthalten, während die andere der Kunststoff-Außenschichten zu 100% aus PETG besteht. Bevorzugt sind beide Kunststoff-Außenschichten identisch.

Gemäß einer Ausführungsform des erfindungsgemäßen Folienverbundmaterials besteht eine oder bestehen beide Kunststoff-Außenschichten jeweils aus zwei Teilschichten, einer inneren Außenschicht, die an die Kunststoff-Innenschicht angrenzt, und einer äußeren Außenschicht. Bevorzugt ist der Schichtaufbau des Folienverbundmaterials symmetrisch hinsichtlich der Zahl der Außenschichten, d.h. es bestehen entweder beide Außenschichten nur aus jeweils einer Schicht, oder es bestehen beide Außenschichten aus jeweils zwei Teilschichten. Auch die beiden Teilschichten einer Außenschicht können sich hinsichtlich des verwendeten PETG-Typs, hinsichtlich ihrer Dicke, und hinsichtlich ihrer Zusatzstoffe unterscheiden. Gemäß einer bevorzugten Ausführungsform enthält die jeweils äußere Außenschicht eine geringe Menge an Antiblockmittel, die innere Außenschicht jedoch nicht.

Gemäß einer anderen Ausführungsform besteht die Kunststoff-Innenschicht aus mehr als einer Schicht, beispielsweise aus zwei oder drei Schichten. Diese Schichten können wiederum gleich oder verschieden sein, d.h. sich hinsichtlich des verwendeten thermoplastischen Copolyester-Elastomers, hinsichtlich ihrer Dicke und/oder hinsichtlich ihrer Zusatzstoffe unterscheiden. Bevorzugt ist der Schichtaufbau jedoch symmetrisch zumindest hinsichtlich der Anzahl der Innenschichten. Ein Aufbau aus mehreren Teilschichten kann beispielsweise dann sehr vorteilhaft sein, wenn die Kunststoff-Innenschicht eine hohe Dicke aufweisen soll, die zur Verfügung stehenden Extruder aber nicht die erforderliche Förderleistung aufweisen. Der Extrusionsprozess muss schließlich rasch durchgeführt werden, damit bei den erforderlichen Extrusionstemperaturen kein thermischer Abbau des thermoplastischen Copolyester-Elastomers stattfindet.

Für die Innenschicht bzw. für die Teilschichten der Innenschicht kann ein einziges thermoplastisches Copolyester-Elastomer oder ein Gemisch von thermoplastischen Copolyester-Elastomeren verwendet werden. Die Elastomere müssen selbstverständlich gut miteinander mischbar und miteinander verträglich sein, d.h. sie müssen vergleichbare Materialeigenschaften und Verarbeitungseigenschaften aufweisen.

Thermoplastische Copolyester-Elastomere gibt es mit Shore D-Härten von 25 bis 70 und mit unterschiedlicher Reißdehnung (150 bis über 300%). Die Verarbeitungstemperaturen liegen zwischen 200 und 240°C. Auch die Schmelzviskositäten (MFI), beispielsweise bei 2,16 kg und 230 °C, können zwischen 3 und 50 cm³/10 min variieren. Für die Zwecke der vorliegenden Erfindung werden thermoplastische Copolyester-Elastomere (TPC) verwendet, deren Shore D-Härte im Bereich von 33 bis 55 liegt, wobei deren Reißdehnung bevorzugt größer 300% ist, und wobei deren Schmelzeviskosität bevorzugt im Bereich von 7 bis 11 cm³/10 min liegt. Diese Schmelzeviskosität ist derjenigen von PETG vergleichbar.

Besonders bevorzugte TPC-Materialien sind thermoplastische Polyesterelastomere vom Polyethertyp. Ein besonders bevorzugtes TPC-Material ist Arnitel VT 3104 (DSM Engineering Plastics).

Die Dicke des erfindungsgemäßen Folienverbundmaterials variiert je nach dem, an welcher Stelle der Schichtfolge eines Kartenkörpers das Folienverbundmaterial vorgesehen werden soll. Wird das Folienmaterial als eine Zwischenschicht (Inlett) verwendet, sind Gesamtschichtdicken im Bereich von etwa 50 bis 350 µm, beispielsweise 240 µm, bevorzugt. Wird das erfindungsgemäße Folienverbundmaterial als Deckschicht (Overlay-Folie) verwendet, sind Gesamtschichtdicken im Bereich von etwa 80 bis 130 µm, beispielsweise 105 µm, bevorzugt. Dabei entfallen, wenn die Gesamtschichtdicke als 100% bezeichnet wird, jeweils etwa 10 bis 30% auf die erste und die zweite Kunststoff-Außenschicht, und dementsprechend etwa 80 bis 40% auf die Kunststoff-Innenschicht. Generell gilt, je höher der Anteil des TPC-Materials an der Gesamtschichtdicke, desto besser die Elastizitätseigenschaften des Folienverbundmaterials. Bei gegebenem TPC-Gehalt sind die vorteilhaften Effekte des erfindungsgemäßen Folienverbundmaterials im allgemeinen umso ausgeprägter, je weiter außen am Kartenkörper sich das Folienverbundmaterial befindet.

Der besondere Vorteil der vorliegenden Erfindung liegt darin, dass keine Polymergemische hergestellt werden müssen, um Abstufungen in den Eigenschaften der einzelnen Schichtmaterialien, und damit eine gute Verbindungsfestigkeit der Schichten untereinander, zu erhalten. Vielmehr können bei Verwendung von PETG und thermoplastischen Copolyester-Elastomeren ohne Abmischungen, d.h. jeweils mit TPC alleine und PETG alleine, gute Verbundwerte des Folienverbundmaterials (Haftfestigkeit größer 30 N/cm) erreicht werden. Gleichzeitig ist der Elastomeranteil hoch und die Verarbeitung unkompliziert.

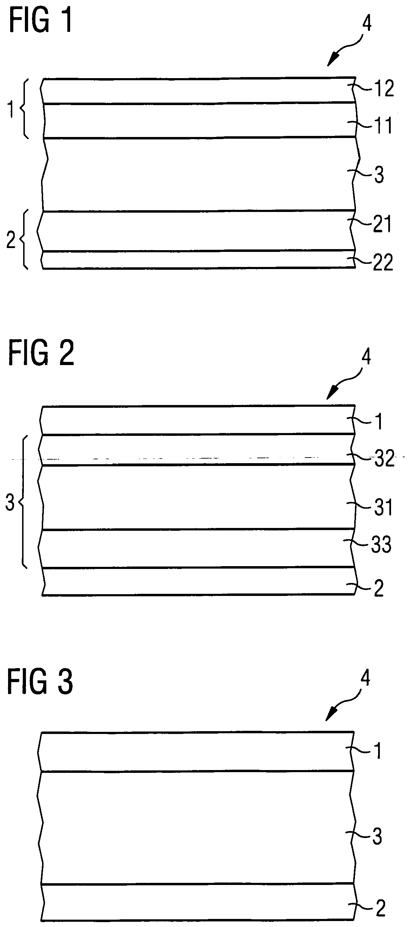

Die Herstellung des erfindungsgemäßen Folienverbundmaterials erfolgt durch Coextrusion. Dabei werden die für die einzelnen Schichten des erfindungsgemäßen Folienverbundmaterials vorgesehenen Materialien jeweils in geeigneten Extrudern geschmolzen und einer Breitschlitzdüse bzw. einem sogenannten Feedblock zugeführt. In der Düse oder dem Feedblock werden sie in der vorgesehenen Schichtfolge zusammengeführt und durch die Düse gemeinsam extrudiert. Es ist von wesentlicher Bedeutung, dass die einzelnen Kunststoffschmelzen vor ihrem Austritt aus der Breitschlitzdüse zusammengeführt werden. Ebenfalls von Bedeutung ist, dass die Extrusionstemperatur und die Extrusionsgeschwindigkeit auf die verwendeten Materialien abgestimmt werden. Die Temperaturen der Extrusionsdüse können typischerweise im Bereich zwischen 210 und 260°C liegen, wobei beachtet werden muss, dass sich das thermoplastische Copolyester-Elastomermaterial bei höheren Temperaturen thermisch zersetzen kann, dass dann also für eine entsprechend hohe Extrusionsgeschwindigkeit gesorgt werden muss. Prozessdaten für zwei beispielhafte Rezepturen sind bei den Figuren 1 und 2 angegeben. Vor dem Verarbeiten müssen alle Materialien vorgetrocknet werden, da sie hygroskopisch sind und durch die aufgenommene Feuchte im Verarbeitungsprozess, durch hydrolytischen Aufschluß im Extruder, abgebaut werden können. Der Feuchtegehalt sollte 0,05% nicht übersteigen.

Das erfindungsgemäße Folienverbundmaterial ist insbesondere dazu geeignet, als Schicht im Schichtaufbau eines Kartenkörpers verwendet zu werden, um die mechanischen Eigenschaften des Kartenkörpers zu verbessern.

Kartenkörper, insbesondere Kartenkörper für Chipkarten und andere Datenträger, bestehen typischerweise aus einer Vielzahl von Schichten, die miteinander durch Laminieren verbunden sind. Die einzelnen Schichten bestehen meist aus thermoplastischen Polymermaterialien, wie Polyvinylchlorid, Polycarbonat oder Polyethylenterephthalat. Zwischen den Schichten bzw. in Aussparungen der Schichten können sich elektronische Bauteile und aufgedruckte Antennen befinden. Als mindestens eine der Schichten des Kartenkörpers wird dabei ein erfindungsgemäßes Folienverbundmaterial verwendet.Insbesondere wird das erfindungsgemäße Folienverbundmaterial als eine oder als beide Deckschichten (Overlay-Folie) des Kartenkörpers eingesetzt. Alternativ oder zusätzlich kann das erfindungsgemäße Folienverbundmaterial als eine Zwischenschicht innerhalb des Kartenaufbaus (Inlett-Folie) vorgesehen werden.

Zur Herstellung des Kartenkörpers werden die Kunststofffolien, die den späteren Kartenkörper bilden sollen, miteinander laminiert. Das Laminieren kann in einem einzigen Arbeitsgang erfolgen, d.h. es werden alle Folienmaterialien, die den Kartenkörper bilden sollen, gestapelt und in einem Arbeitsgang laminiert. Alternativ kann das Laminieren in zwei oder mehr Arbeitsgängen durchgeführt werden, das heißt es wird nur jeweils ein Teil der Folien gemeinsam zu einem Teilstapel laminiert, und die Teilstapel dann später in einem weiteren Arbeitsgang zu dem Kartenkörper gestapelt und laminiert. Ein guter Laminatverbund wird dabei durch ein Laminieren bei einem geeigneten Druck und bei einer Temperatur zwischen 120°C und 200°C erreicht, insbesondere zwischen 130°C und 180°C, bevorzugt zwischen 140°C und 160°C.

Vorzugsweise wird das Laminieren in einer Heizstation und einer Kühlstation durchgeführt. Die Laminierzeit liegt in der Heiz- und/oder Kühlstation vorzugsweise jeweils zwischen 10 Minuten und 25 Minuten.

Die erfindungsgemäßen Kartenkörper haben typischerweise Gesamtdicken im Bereich von etwa 0,5 bis 1,0 mm. Die Gesamtdicke des erfindungsgemäßen Folienverbundmaterials liegt in der Regel zwischen 50 µm und 350 µm, je nach dem, an welcher Stelle des Schichtverbunds des Kartenkörpers das Folienverbundmaterial eingesetzt werden soll. Inlett-Folien sind für gewöhnlich dicker als Overlay-Folien, wobei die Gesamtdicke für Inlett-Folien typischerweise im Bereich von 200 µm bis 280 µm liegt, und die Gesamtdicke für Overlay-Folien typischerweise im Bereich von 80 µm bis 130 µm liegt. Die erfindungsgemäßen Folienverbundmaterialien verschmelzen dank ihrer Außenschichten aus PETG sehr gut mit benachbarten Schichten des Kartenkörper-Schichtaufbaus, so dass ein stabiler Kartenkörper-Laminatverbund erhalten wird. Laminierkleber können zwar verwendet werden, sind aber nicht erforderlich. Gleichzeitig sorgen die PETG-Außenschichten, wenn das erfindungsgemäße Folienverbundmaterial als Overlay-Folie verwendet wird, dafür, dass die Kartenkörper problemlos bedruckt und gehandhabt werden können, und nicht zu einem Verblocken neigen.

Die Erfindung wird nachfolgend anhand von Figuren noch weiter veranschaulicht. Es wird darauf hingewiesen, dass die Figuren nicht maßstabsgetreu und nicht proportionsgetreu sind. Außerdem wird darauf hingewiesen, dass die Figuren die Erfindung lediglich näher erläutern sollen und in keiner Weise beschränkend zu verstehen sind. Gleiche Bezugsziffern bezeichnen gleiche Elemente.

Es zeigen:
- Figur 1: einen Schnitt durch ein erfindungsgemäßes Folienverbundmaterial mit einer Kunststoff-Innenschicht, zwei ersten KunststoffAußenschichten und zwei zweiten Kunststoff-Außenschichten,
- Figur 2: einen Schnitt durch ein erfindungsgemäßes Folienverbundmaterial mit einer Kunststoff-Innenschicht, die aus einer inneren Innenschicht und zwei äußeren Innenschichten besteht, und mit einer ersten Kunststoff-Außenschicht und einer zweiten KunststoffAußenschicht, _
- Figur 3: einen Schnitt durch ein erfindungsgemäßes Folienverbundmaterial mit einer Kunststoff-Innenschicht, einer ersten KunststoffAußenschicht und einer zweiten Kunststoff-Außenschicht,
- Figur 4: einen Schnitt durch einen erfindungsgemäßen Kartenkörper mit zwei erfindungsgemäßen Folienverbundmaterialien als Deckschichten,
- Figur 5: einen Schnitt durch einen erfindungsgemäßen Kartenkörper mit zwei erfindungsgemäßen Folienverbundmaterialien als Zwischenschichten, und
- Figur 6: einen Schnitt durch einen erfindungsgemäßen Kartenkörper mit zwei erfindungsgemäßen Folienverbundmaterialien als Deckschichten.

Fig. 1 zeigt eine erste Ausführungsform eines erfindungsgemäßen Folienverbundmaterials 4. In der dargestellten Ausführungsform hat das Folienverbundmaterial fünf Schichten, eine Kunststoff-Innenschicht 3, eine erste Kunststoff-Außenschicht 1 und eine zweite Kunststoff-Außenschicht 2, wobei die Kunststoff-Außenschicht 1 aus einer inneren Teilschicht 11 und einer äußeren Teilschicht 12 besteht, und die Kunststoff-Außenschicht 2 aus einer inneren Teilschicht 21 und einer äußeren Teilschicht 22 besteht. Die Innenschicht 3 besteht zu 100% aus einem thermoplastischen Copolyester-Elastomer oder einem Gemisch von thermoplastischen Copolyester-Elastomeren, und die erste Kunststoff-Außenschicht 1 und die zweite Kunststoff-Außenschicht 2 bestehen aus thermoplastischem Kunststoffmaterial, wobei die beiden inneren Außenschichten 11, 21 zu 100% aus PETG bestehen, während die beiden äußeren Außenschichten 12, 22 zusätzlich zu PETG ein Antiblockmittel enthalten, beispielsweise etwa 4 Gew.-% Antiblockmittel, Rest PETG. Die Gehalte sind stets in Gew.-% angegeben.

Die Herstellung des Folienverbundmaterials 4 kann beispielsweise erfolgen, indem Granulate mit drei verschiedenen Zusammensetzungen (Granulat A: 96% PETG + 4% Antiblockmittel; Granulat B: 100% PETG; Granulat C: 100% TPC) in drei Extrudern A, B, C geschmolzen werden, und die entsprechenden Schmelzeströme (Material A aus Extruder A, Material B aus Extruder B, Material C aus Extruder C) in einem Feedblock zusammengeführt und gemeinsam durch eine Breitschlitzdüse extrudiert werden. In der dargestellten Ausführungsform ist das Folienverbundmaterial symmetrisch im Aufbau, d.h. die inneren Außenschichten 11, 21 und die äußeren Außenschichten 12, 22 haben jeweils die gleiche Zusammensetzung und die gleiche Dicke. Dies ist nicht zwingend. Vielmehr können sich die inneren Außenschichten 11, 21 bzw. die äußeren Außenschichten 12, 22 jeweils voneinander unterscheiden, beispielsweise unterschiedliches PETG enthalten, eine unterschiedliche Dicke aufweisen oder einen unterschiedlichen Gehalt an Antiblockmittel aufweisen. In einem solchen Fall sind entsprechend mehr Extruder in einer modifizierten Feedblock- oder Breitschlitzdüsenanordnung erforderlich. Bevorzugt sind die erfindungsgemäßen Folienverbundmaterialien jedoch symmetrisch aufgebaut, zum einen aus Gründen der einfacheren Herstellbarkeit, und zum anderen, da ein unsymmetrischer Aufbau meist keine Vorteile bringt.

In der dargestellten Ausführungsform ist die Kunststoff-Innenschicht 3 die dickste Schicht. Dies wird meist in der Praxis tatsächlich so sein, da ein möglichst hoher Anteil an TPC-Material erwünscht ist, um eine hohe Elastizität des Folienverbundmaterials 4 zu erreichen. Beispielhafte Schichtdicken sind etwa jeweils 10% der Gesamtdicke für die Schichten 12, 22, jeweils 20% der Gesamtschichtdicke für die Schichten 11, 21, und etwa 40% der Gesamtschichtdicke für die Schicht 3.

Folgende Extrudereinstellungen ergaben gute Ergebnisse:

| | Temperatur [°C] | Einzugszone [°C] |
|---|---|---|
| Extruder A | 220 - 260 | 40 - 60 |
| Extruder B | 225 - 250 | 40 - 60 |
| Extruder C | 215 - 245 | 40 - 70 |
| Düse | 210 - 260 | |

Die jeweils günstigsten Extrudereinstellungen können in Abhängigkeit von den eingesetzten Extrudern (Durchsatz, Schneckengeometrien bzw. der eingesetzten Materialien und deren Restfeuchtegehalt) variieren. Sie stellen Angaben zur Orientierung dar, die ein Fachmann gegebenenfalls durch wenige Routineversuche an die vorgegebenen Extruderkonfigurationen und Materialgegebenheiten anpassen kann.

Fig. 2 zeigt eine andere Ausführungsform eines erfindungsgemäßen Folienverbundmaterials 4 im Schnitt. Bei dieser Ausführungsform besteht die Kunststoff-Innenschicht aus einer inneren Teilschicht 31 und zwei äußeren Teilschichten 32, 33. Darauf befinden sich eine erste Kunststoff-Außenschicht 1 und eine zweite Kunststoff-Außenschicht 2. Die Innenschichten 31, 32, 33 bestehen wiederum aus thermoplastischem Copolyester-Elastomer (TPC), wobei alle Innenschichten aus demselben TPC-Material oder aus unterschiedlichen TPC-Materialien bestehen können. Gewünschtenfalls kann für eine oder mehrere der Innenschichten 31, 32, 33 auch ein Gemisch von TPC-Materialien verwendet werden. Es ist bevorzugt, für alle Innenschichten 31, 32, 33 dasselbe TPC-Material zu verwenden. Der besondere Vorteil der vorliegenden Erfindung liegt darin, dass bei Verwendung thermoplastischer Copolyester-Elastomere für die Innenschichten in Kombination mit PETG für die Außenschichten keine Abmischungen erforderlich sind, um verträgliche Übergänge zwischen den Schichten zu erzeugen.

Die Herstellung des in Fig. 2 dargestellten Folienverbundmaterials 4 kann in analoger Weise wie bei dem in Fig. 1 dargestellten Folienverbundmaterial erfolgen. Das heißt, in einem Extruder A würde beispielsweise ein Kunststoffmaterial aus 96% PETG mit 4% Antiblockmittel für die Außenschichten 1 und 2 geschmolzen und einer Breitschlitzdüse zugeführt, und in zwei Extrudern B und C würde jeweils ein Kunststoffmaterial aus 100% TPC geschmolzen und der Breitschlitzdüse zugeführt, wobei die Zuführung so erfolgt, dass der in Fig. 2 dargestellte Schichtaufbau erzeugt wird. Extruder C, der das Material für die dickste innere Innenschicht 31 extrudiert, muss dabei über die größte Förderleistung verfügen.Allerdings ist es auch möglich, daß der Extruder C nicht über die größte Förderleistung verfügt. Die Förderleistung der einzelnen Extruder kann allgemein an die Produktionsbedingungen und an die spezifischen Anforderungen des jeweils verwendeten Kunststoffmaterials und der damit zu erzeugenden Schicht angepasst werden.

Nachfolgend sind beispielhafte Extrudereinstellungen zur Herstellung des Folienverbundmaterials 4 angegeben, die gegebenenfalls an die im jeweiligen Einzelfall vorhandenen Extruder-Konfigurationen und Materialfeuchten anzupassen sind.

| | Temperatur [°C] | Einzugszone [°C] |
|---|---|---|
| Extruder A | 220 - 250 | 40 - 60 |
| Extruder B | 215 - 240 | 40 - 60 |
| Extruder C | 215 - 240 | 40 - 60 |
| Düse | 210 - 250 | |

Für alle Ausführungsformen und Schichtfolgen des erfindungsgemäßen Folienverbundmaterials hat es sich besonders bewährt, folgende Materialien einzusetzen:
Arnitel VT 3104 als thermoplastische Copolyester-Elastomer,
Eastman PETG 6763 als thermoplastisches Polymer,
Release Sukano S 462 als Antiblockmittel.

Fig. 3 zeigt eine weitere Ausführungsform des erfindungsgemäßen Folienverbundmaterials 4. Diese Ausführungsform hat den einfachsten Schichtaufbau mit einer einzigen Innenschicht 3 aus TPC-Material und zwei Außenschichten 1, 2 aus PETG. Eine oder mehrere der Schichten können, wie auch bei allen anderen Ausführungsformen, übliche Zusatzstoffe enthalten, beispielsweise Farbstoffe, UV-Schutzmittel oder (bei den Außenschichten) Antiblockmittel. Antiblockmittel sind jedoch nicht zwingend erforderlich.

Üblicherweise ist es erwünscht, dass die Innenschicht aus TPC-Material einen möglichst großen Anteil an der Gesamtdicke des Folienverbundmaterials hat, damit die vorteilhaften Elastizitätseigenschaften des TPC-Materials gut zum Tragen kommen. Die Außenschichten 1, 2 aus PETG werden meist dünn gehalten, da sie dazu dienen sollen, die TPC-Innenschicht(en) mit den Oberflächeneigenschaften des thermoplastischen Polymers PETG auszustatten. Ferner sollen die Außenschichten 1, 2 der Folie auch die benötigte Steifigkeit verleihen, um diese in den gängigen Verfahren weiter verarbeiten zu können, wie z.B. zum Bedrucken, Handhaben etc. Diese Eigenschaften sind beispielsweise die gute Laminierbarkeit, Handhabbarkeit ohne massive Verblockungsgefahr, gute Bedruckbarkeit, etc. Unter diesem Gesichtspunkt sollte die Schichtdicke der TPC-Innenschicht einen Anteil von mindestens 40% an der Gesamtdicke des Folienverbundmaterials haben. Bevorzugt sind Anteile von 60 bis 80% TPC-Schichtdicke an der Folienmaterial-Schichtdicke. Um diese hohen Schichtdicken problemlos erzielen zu können, wird die TPC-Innenschicht meist mit Hilfe mehrerer Extruder aus mehreren Teilschichten zusammengesetzt.

Es ist grundsätzlich möglich, sowohl die Kunststoff-Außenschichten 1, 2 als auch die Kunststoff-Innenschicht 3 aus jeweils mehreren Teilschichten zusammenzusetzen. Gleichzeitig ist es aber bevorzugt, dass das erzeugte Folienverbundmaterial 4 nicht mehr als sieben Teilschichten aufweist, da die Coextrusion verfahrenstechnisch umso schwieriger wird, je mehr Teilschichten miteinander coextrudiert werden müssen. Bevorzugt besteht daher entweder die Innenschicht 3 oder die Außenschichten 1, 2 aus Teilschichten, wobei die Außenschichten jeweils aus nicht mehr als zwei Teilschichten aufgebaut werden sollten, und die Innenschicht aus nicht mehr als fünf, bevorzugt nicht mehr als drei, Teilschichten aufgebaut werden sollte.

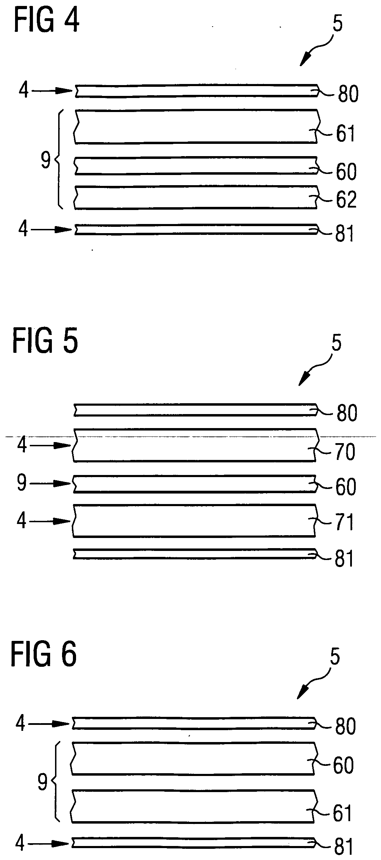

Die Figuren 4, 5 und 6 zeigen jeweils beispielhafte Schichtaufbauten für erfindungsgemäße Kartenkörper 5 (Explosionsdarstellungen). Allgemein bestehen erfindungsgemäße Kartenkörper aus einem Kartenkern 9, der typischerweise aus ein bis sieben Schichten aufgebaut ist. Die Schichten bestehen aus thermoplastischen Folien, typischerweise aus PVC, ABS, Polyester, Polycarbonat, PEC (Blend aus PC und einem oder mehreren anderen Polyestern) und dergleichen. Zwischen den Schichten und/oder in Aussparungen der Schichten können sich elektronische Bauteile wie elektronische Module und Antennen befinden. Auch andere Merkmale, wie beispielsweise Sicherheitselemente oder Aufdrucke, können vorgesehen werden. Der Schichtaufbau wird jeweils außenseitig durch eine Deckschicht abgeschlossen. Die den Schichtaufbau bildenden Folien werden bevorzugt durch Laminieren miteinander verbunden, weshalb alle verwendeten Materialien gut miteinander laminierbar sein sollten.

Fig. 4 zeigt eine Ausführungsform eines erfindungsgemäßen Kartenkörpers 5 mit einem Kartenkern 9, bestehend aus einer PET-Folie 60 (152 µm), auf die gegebenenfalls eine Spule (nicht gezeigt) aufgedruckt sein kann, und zwei PVC-Folien 61, 62 (jeweils 240 µm). Der Schichtaufbau wird abgeschlossen durch die beiden Deckfolien 80, 81 (jeweils 105 µm), die aus dem erfindungsgemäßen Folienverbundmaterial 4, wie es vorstehend beschrieben wurde, bestehen.

Fig. 5 zeigt eine andere Ausführungsform eines erfindungsgemäßen Kartenkörpers 5. Hier besteht der Kartenkern 9 aus einer einzigen PET-Folie 60 (152 µm) mit einer aufgedruckten Antenne (nicht gezeigt). An die PET-Folie 60 schließen sich beidseitig die Schichten 70, 71 (jeweils 240 µm) an. Die Schichten 70, 71 bestehen bei diesem Ausführungsbeispiel aus dem erfindungsgemäßen Folienverbundmaterial 4. Der Schichtaufbau wird abgeschlossen durch die beiden Deckschichten 80, 81 aus einer PETG-Overlay-Folie (jeweils 105 µm).

Eine weitere alternative Ausführungsform für einen erfindungsgemäßen Kartenkörper 5 ist in Fig. 6 dargestellt. Hier besteht der Kartenkern 9 aus den PETG-Folien 60, 61 (jeweils 310 µm), worauf die Deckschichten 80, 81 (jeweils 105 µm) auflaminiert sind. Die Deckschichten 80, 81 bestehen aus dem erfindungsgemäßen Folienverbundmaterial 4.

In den Figuren 4, 5 und 6 bezeichnen die µm-Angaben in Klammern jeweils die Schichtdicken. Es versteht sich, dass die angegebenen Schichtdicken, wie auch die angegebenen Materialien, lediglich beispielhaft zu verstehen sind, und auch andere miteinander laminierbare Materialien sowie abweichende Schichtdicken und abweichende Zahlen von Schichten verwendet werden können. Auch sind die Kartenaufbauten in den Figuren symmetrisch dargestellt, was jedoch keineswegs zwingend ist. Wesentlich ist, dass das erfindungsgemäße Folienverbundmaterial 4 sowohl als Deckschicht, wie in Fig. 4 und Fig. 6 gezeigt, als auch als Zwischenschicht, wie in Fig. 5 gezeigt, verwendet werden kann. Möglich sind auch Ausführungsformen, bei denen das erfindungsgemäße Folienverbundmaterial 4 nur als eine der Deckschichten und/oder als eine Zwischenschicht verwendet wird, und Ausführungsformen, die sowohl Deckschichten als auch Zwischenschichten aus dem erfindungsgemäßen Folienverbundmaterial 4 aufweisen. Bei Verwendung als Deckschicht (Overlay-Folie) ist die Schichtdicke des Folienverbundmaterials 4 typischerweise maximal halb so dick wie bei einer Verwendung als Zwischenschicht (Inlett-Folie). Als Deckschicht ist das erfindungsgemäße Folienverbundmaterial bevorzugt transparent, während es als Zwischenschicht bevorzugt opak ist.

Durch den Einsatz des erfindungsgemäßen Folienverbundmaterials als Deckschicht(en) und/oder als Zwischenschicht(en) in einem Kartenkörper können die mechanischen Eigenschaften von Kartenkörpern gegenüber Kartenkörpern des Stands der Technik maßgeblich verbessert werden. Die Kartenkörper können stärkeren und häufigeren Biegebelastungen ausgesetzt werden, ohne dass es zu Spannungen, Rissen oder Brüchen des Kartenkörpers kommt. Auch Spannungen, die durch den Einbau elektronischer Module, die stets eine Schwächung des Kartenkörpers bewirken, entstehen, können ausgeglichen und somit die mechanischen Eigenschaften des Kartenkörpers verbessert werden. Das erfindungsgemäße Folienverbundmaterial kann in den Kartenkörpern anstelle jeder beliebigen Standardfolie eingesetzt werden. Es ist selbst hochflexibel und verleiht den Kartenkörpern Flexibilität. Insbesondere Kartenaufbauten, bei denen das erfindungsgemäße Folienverbundmaterial als Zwischenschicht eingesetzt wird, wie in Fig. 5 beispielhaft dargestellt, haben hervorragende mechanische Eigenschaften, wie hervorragende Festigkeit und Steifigkeit. Dies zeigt sich besonders bei schlagartigen Krafteinwirkungen, die ansonsten im Regelfall zum Kartenbruch führen. Dies dürfte durch die größere Dicke der Folienverbundmaterial-Zwischenschichten, und damit den höheren Anteil des erfindungsgemäßen Folienverbundmaterials am Kartenkörper insgesamt, bedingt sein.

Das erfindungsgemäße Folienverbundmaterial ist auch in sich sehr stabil, d.h. es besteht ein fester Verbund zwischen den Teilschichten aus PETG und thermoplastischem Copolyester-Elastomer, ohne die Gefahr einer Trennung der Teilschichten voneinander bei Belastung. Diese Stabilität kann erzielt werden, ohne dass Abstufungen zwischen den Teilschichten durch Verwendung von Materialgemischen erzeugt werden. Daher brauchen bei der Coextrusion keine Granulatabmischungen hergestellt zu werden.

Das erfindungsgemäße Folienverbundmaterial kann preisgünstig hergestellt werden, und es steht ein breites Spektrum an thermoplastischen Copolyester-Elastomeren mit unterschiedlichen Eigenschaften auf dem Markt zur Verfügung. Das Folienverbundmaterial aus PETG und thermoplastischen Copolyester-Elastomeren ist einfacher im Coextrusionsverfahren zu verarbeiten als Folien mit anderen thermoplastischen Elastomeren. Es zeichnet sich auch durch eine besonders einfache Handhabung bei der Weiterverarbeitung aus, d.h. es kann beispielsweise problemlos bedruckt und mit allen gängigen Kartenmaterialien laminiert werden. Es neigt auch nicht zum Verblocken. Ein besonderer Vorteil, der das erfindungsgemäße Folienverbundmaterial insbesondere zur Verwendung als Schicht in einem Kartenkörper ausgezeichnet geeignet macht, ist die Tatsache, dass das Folienverbundmaterial mit einem sehr hohen Anteil an thermoplastischem Elastomer hergestellt werden kann, wodurch die mechanischen Eigenschaften des Kartenkörpers in hervorragender Weise verbessert werden.

## Patentansprüche

1. Kartenkörper (5) für einen tragbaren Datenträger, mit einer Mehrzahl von miteinander laminierten Kunststoffschichten, umfassend
einen Kartenkern (9) aus mindestens einer Kernschicht (60, 61, 62),
mindestens zwei Deckschichten (80, 81), um beide Oberflächen des Kartenkerns (9) zu bedecken, und
gegebenenfalls mindestens eine Zwischenschicht (70, 71) zwischen dem Kartenkern (9) und mindestens einer der Deckschichten (80, 81),
**dadurch gekennzeichnet, dass**
mindestens eine der Deckschichten (80, 81) und/oder mindestens eine Zwischenschicht (70, 71) ein Folienverbundmaterial (4) ist, bestehend aus
einer ersten Kunststoff-Außenschicht (1),
einer Kunststoff-Innenschicht (3), und
einer zweiten Kunststoff-Außenschicht (2),
wobei alle Schichten (1, 3, 2) gemeinsam einen Coextrusionsverbund bilden,
wobei die Kunststoff-Innenschicht (3) des Folienverbundmaterials (4) aus einem thermoplastischen Copolyester-Elastomer (TPC) besteht,
und die beiden Kunststoff-Außenschichten (1, 2) aus einem Polyethylenterephthalat-Glycol-Copolymer (PETG), sogenanntem Glykol modifiziertem Polyethylenterephthalat, bestehen,
wobei das thermoplastische Copolyester-Elastomer sowie das PETG jeweils nur die Kunststoffmaterialien der Innenschicht (3) bzw. der Außenschichten (1, 2) bilden,
wobei das thermoplastische Copolyester-Elastomer eine Shore D-Härte von 33 bis 55 hat.

2. Kartenkörper (5) nach Anspruch 1, **dadurch gekennzeichnet, dass** die erste Kunststoff-Außenschicht (1) aus einer äußeren Schicht (12) und einer inneren Schicht (11) besteht und/oder die zweite Kunststoff-Außenschicht (2) aus einer äußeren Schicht (22) und einer inneren Schicht (21) besteht.

3. Kartenkörper (5) nach Anspruch 1 oder 2, **dadurch gekennzeichnet, dass** die Kunststoff-Innenschicht (3) aus einer inneren Schicht (31) und zwei äußeren Schichten (32, 33) besteht.

4. Kartenkörper (5) nach einem der Ansprüche 1 bis 3, **dadurch gekennzeichnet, dass** eine oder mehrere der Kunststoffschichten (1, 2,3), neben dem Kunststoffmaterial, Additive enthält, wie ein oder mehrere Additive aus der Gruppe, die aus Füllstoffen, Farbpigmenten, Oxidationsstabilisatoren, UV-Stabilisatoren, Laseradditiven, Flammhemmstoffen und optischen Aufhellern besteht.

5. Kartenkörper (5) nach einem der Ansprüche 1 bis 4, **dadurch gekennzeichnet, dass** die erste (1) und/oder die zweite (2) Kunststoff-Außenschicht 0 bis 5 Gew.-% eines Antiblockmittels enthält.

6. Kartenkörper (5) nach einem der Ansprüche 1 bis 4, **dadurch gekennzeichnet, dass** die erste Kunststoff-Außenschicht (1) aus einer äußeren Schicht (12) und einer inneren Schicht (11) besteht und/oder die zweite Kunststoff-Außenschicht (2) aus einer äußeren Schicht (22) und einer inneren Schicht (21) besteht,
wobei die innere Schicht (11; 21) aus PETG besteht und die äußere Schicht (12; 22) aus PETG und 0 bis 5 Gew.-% eines Antiblockmittels besteht.

7. Kartenkörper (5) nach einem der Ansprüche 1 bis 6, **dadurch gekennzeichnet, dass** das Folienverbundmaterial (4) eine Dicke zwischen 50 µm und 350 µm, oder eine Dicke zwischen 80 µm und 130 µm oder zwischen 200 µm und 280 µm, hat.

8. Kartenkörper (5) nach einem der Ansprüche 1 bis 7, **dadurch gekennzeichnet, dass** die Dicke der Kunststoff-Innenschicht (3) 40 bis 80% der Gesamtdicke des Folienverbundmaterials (4) ausmacht.

9. Kartenkörper (5) nach einem der Ansprüche 1 bis 8, **dadurch gekennzeichnet, dass** die Haftfestigkeit der Schichten (1, 2,3) aneinander größer als 30 N/cm ist.

10. Verfahren zur Herstellung eines Kartenkörpers (5) für einen tragbaren Datenträger, mit einer Mehrzahl von Kunststoffschichten, umfassend:
einen Kartenkern (9) aus mindestens einer Kernschicht (60, 61, 62),
mindestens zwei Deckschichten (80, 81), um beide Oberflächen des Kartenkerns (9) zu bedecken, und
gegebenenfalls mindestens eine Zwischenschicht (70, 71) zwischen dem Kartenkern (9) und mindestens einer der Deckschichten (80, 81),
bei dem die Kunststoffschichten in einem Arbeitsvorgang oder in mehreren Arbeitsvorgängen miteinander laminiert werden,
**dadurch gekennzeichnet, dass**
als mindestens eine der Deckschichten (80, 81) und/oder als mindestens eine Zwischenschicht (70, 71) ein Folienverbundmaterial (4) wie in Anspruch 1 angegeben verwendet wird,
wobei das Folienverbundmaterial (4) erhältlich ist gemäß einem Verfahren aufweisend ein Coextrudieren mindestens eines ersten Außenschicht-Kunststoffmaterials,
mindestens eines zweiten Außenschicht-Kunststoffmaterials, und
mindestens eines Innenschicht-Kunststoffmaterials,
wobei alle Kunststoffmaterialien im geschmolzenen Zustand vor dem Verlassen der Extruderdüse so zusammengeführt werden, dass ein Folienverbundmaterial (4) extrudiert wird, bei dem eine Kunststoff-Innenschicht (3) beidseitig von einer ersten (1) und einer zweiten (2) Kunststoff-Außenschicht bedeckt wird,
das mindestens eine erste Außenschicht-Kunststoffmaterial eine Zusammensetzung hat wie in einem der Ansprüche 1 oder 4 bis 6 angegeben,
das mindestens eine zweite Außenschicht-Kunststoffmaterial eine Zusammensetzung hat wie in einem der Ansprüche 1 oder 4 bis angegeben, und
das mindestens eine Innenschicht-Kunststoffmaterial eine Zusammensetzung hat wie in Anspruch 1 oder 4 angegeben.

11. Verfahren nach Anspruch 10, **dadurch gekennzeichnet, dass** die Coextrusion bei einer Düsentemperatur von 210 bis 260°C durchgeführt wird.

12. Verfahren nach Anspruch 10 oder 11, **dadurch gekennzeichnet, dass** die Extruder-Förderleistungen so eingestellt werden, dass ein Folienverbundmaterial (4) coextrudiert wird, bei dem die Dicke der Innenschicht (3) 40 bis 80% der Dicke des Folienverbundmaterials (4) ausmacht.

13. Verfahren nach einem der Ansprüche 10 bis 12, **dadurch gekennzeichnet, dass** das Laminieren bei einer Temperatur von zwischen 120°C und 200°C erfolgt, oder zwischen 130°C und 140°C.

## Claims

1. A card body (5) for a portable data carrier having a plurality of plastic layers laminated with each other, comprising
a card core (9) of at least one core layer (60, 61, 62),
at least two cover layers (80, 81) for covering both surfaces of the card core (9), and
optionally at least one intermediate layer (70, 71) between the card core (9) and at least one of the cover layers (80, 81),
**characterized in that**
at least one of the cover layers (80, 81) and/or at least one intermediate layer (70, 71) is a foil composite material (4), consisting of
a first plastic outer layer (1),
a plastic inner layer (3) and a second plastic outer layer (2), wherein all layers (1, 2, 3) together form a coextruded composite,
wherein the plastic inner layer (3) of the foil composite material (4) consists of a thermoplastic copolyester elastomer (TPC), and
the two plastic outer layers (1, 2) consist of a polyethylene terephthalate glycol copolymer (PETG), a so-called glycol-modified polyethylene terephthalate,
wherein the thermoplastic copolyester elastomer and the PETG respectively form only the plastic materials of the inner layer (3) and/or of the outer layers (1, 2),
wherein the thermoplastic copolyester elastomer has a Shore D hardness of 33 to 55.

2. The card body (5) according to claim 1, **characterized in that** the first plastic outer layer (1) consists of an outer layer (12) and an inner layer (11) and/or the second plastic outer layer (2) consists of an outer layer (22) and an inner layer (21).

3. The card body (5) according to claim 1 or 2, **characterized in that** the plastic inner layer (3) consists of an inner layer (31) and two outer layers (32, 33).

4. The card body (5) according to any of the claims 1 to 3, **characterized in that** one or several of the plastic layers (1, 2, 3) in addition to the plastic material contains additives, such as one or several additives from the group consisting of fillers, color pigments, oxidation stabilizers, UV stabilizers, laser additives, flame inhibitors and optical brighteners.

5. The card body (5) according to any of the claims 1 to 4, **characterized in that** the first (1) and/or the second (2) plastic outer layer contains 0 to 5 wt.-% of an anti-blocking agent.

6. The card body (5) according to any of the claims 1 to 4, **characterized in that** the first plastic outer layer (1) consists of an outer layer (12) and an inner layer (11) and/or the second plastic outer layer (2) consists of an outer layer (22) and an inner layer (21), wherein the inner layer (11; 21) consists of PETG and the outer layer (12; 22) consists of PETG and 0 to 5 wt.-% of an anti-blocking agent.

7. The card body (5) according to any of the claims 1 to 6, **characterized in that** the foil composite material (4) has a thickness between 50 µm and 350 µm or a thickness between 80 µm and 130 µm or between 200 µm and 280 µm.

8. The card body (5) according to any of the claims 1 to 7, **characterized in that** the thickness of the plastic inner layer (3) constitutes 40 to 80% of the overall thickness of the foil composite material (4).

9. The card body (5) according to any of the claims 1 to 8, **characterized in that** the adhesive strength of the layers (1, 2, 3) to one another is greater than 30 N/cm.

10. A method for manufacturing a card body (5) for a portable data carrier having a plurality of plastic layers, comprising:
a card core (9) of at least one core layer (60, 61, 62),
at least two cover layers (80, 81) for covering both surfaces of the card core (9), and
optionally at least one intermediate layer (70, 71) between the card core (9) and at least one of the cover layers (80, 81), wherein the plastic layers are laminated to each other in one work operation or in several work operations, **characterized in that**
as at least one of the cover layers (80, 81) and/or as at least one intermediate layer (70, 71) a foil composite material (4) as specified in claim 1 is employed,
wherein the foil composite material (4) is obtainable according to a method having a coextruding
of at least one first outer-layer plastic material,
at least one second outer-layer plastic material, and
at least one inner-layer plastic material,
wherein all plastic materials are so joined in a molten state before leaving the extruder nozzle that a foil composite material (4) is extruded in which a plastic inner layer (3) is covered on both sides by a first (1) and a second (2) plastic outer layer,
that at least one first outer-layer plastic material has a composition as specified in any of the claims 1 or 4 to 6,
that at least one second outer-layer plastic material has a composition as specified in any of the claims 1 or 4 to 6, and
that at least one inner-layer plastic material has a composition as specified in claim 1 or 4.

11. The method according to claim 10, **characterized in that** the coextrusion is carried out at a nozzle temperature of 210 to 260°C.

12. The method according to claim 10 or 11, **characterized in that** the extruder delivery capabilities are adjusted such that a foil composite material (4) is coextruded in which the thickness of the inner layer (3) constitutes 40 to 80% of the thickness of the foil composite material (4).

13. The method according to any of the claims 10 to 12, **characterized in that** the lamination is effected at a temperature of between 120°C and 200°C, or between 130°C and 140°C.

## Revendications

1. Corps de carte (5) destiné à un support de données portable, comportant une pluralité de couches en matière plastique laminées ensemble, comprenant
un coeur de carte (9) composé d'au moins une couche noyau (60, 61, 62),
au moins deux couches de recouvrement (80, 81) destinées à recouvrir les deux surfaces du coeur de carte (9), et
éventuellement au moins une couche intermédiaire (70, 71) entre le coeur de carte (9) et au moins une des couches de recouvrement (80, 81),
**caractérisé en ce que**
au moins une des couches de recouvrement (80, 81) et/ou au moins une couche intermédiaire (70, 71) est un matériau composite en feuille (4), consistant en
une première couche extérieure en matière plastique (1),
une couche intérieure en matière plastique (3), et
une deuxième couche extérieure en matière plastique (2),
cependant que toutes les couches (1, 2, 3) constituent conjointement un composite obtenu par co-extrusion,
cependant que la couche intérieure en matière plastique (3) du matériau composite en feuille (4) consiste en un élastomère de copolyester thermoplastique (TPC),
et que les deux couches extérieures en matière plastique (1, 2) consistent en un copolymère de polyéthylène-téréphtalate-glycol (PETG), dit polyéthylène téréphtalate modifié au glycol,
cependant que l'élastomère de copolyester thermoplastique ainsi que le PETG ne constituent respectivement que les matériaux en matière plastique de la couche intérieure (3) et/ou des couches extérieures (1, 2),
cependant que l'élastomère de copolyester thermoplastique présente une dureté Shore D comprise entre 33 et 55.

2. Corps de carte (5) selon la revendication 1, **caractérisé en ce que** la première couche extérieure en matière plastique (1) consiste en une couche externe (12) et en une couche interne (11), et/ou **en ce que** la deuxième couche extérieure en matière plastique (2) consiste en une couche externe (22) et en une couche interne (21).

3. Corps de carte (5) selon la revendication 1 ou 2, **caractérisé en ce que** la couche intérieure en matière plastique (3) consiste en une couche interne (31) et en deux couches externes (32, 33).

4. Corps de carte (5) selon une des revendications de 1 à 3, **caractérisé en ce qu'**une ou plusieurs des couches en matière plastique (1, 2, 3), outre le matériau en matière plastique, contient des additifs tels qu'un ou plusieurs additifs du groupe consistant en des matières de remplissage, pigments de couleur, stabilisants d'oxydation, stabilisants UV, additifs laser, inhibiteurs de flamme et azurants optiques.

5. Corps de carte (5) selon une des revendications de 1 à 4, **caractérisé en ce que** la première (1) et/ou la deuxième (2) couche extérieure en matière plastique contient entre 0 et 5 pourcent par poids d'un agent anti-bloquant.

6. Corps de carte (5) selon une des revendications de 1 à 4, **caractérisé en ce que** la première couche extérieure en matière plastique (1) consiste en une couche externe (12) et en une couche interne (11), et/ou **en ce que** la deuxième couche extérieure en matière plastique (2) consiste en une couche externe (22) et en une couche interne (21),
cependant que la couche interne (11; 21) consiste en du PETG et la couche externe (12; 22) consiste en du PETG et en entre 0 et 5 pourcent par poids d'un agent anti-bloquant.

7. Corps de carte (5) selon une des revendications de 1 à 6, **caractérisé en ce que** le matériau composite en feuille (4) a une épaisseur comprise entre 50 µm et 350 µm, ou une épaisseur comprise entre 80 µm et 130 µm ou entre 200 µm et 280 µm.

8. Corps de carte (5) selon une des revendications de 1 à 7, **caractérisé en ce que** l'épaisseur de la couche intérieure en matière plastique (3) représente 40 à 80 % de l'épaisseur totale du matériau composite en feuille (4).

9. Corps de carte (5) selon une des revendications de 1 à 8, **caractérisé en ce que** l'adhérence des couches (1, 2, 3) entre elles est supérieure à 30 N/cm.

10. Procédé de fabrication d'un corps de carte (5) destiné à un support de données portable, ayant une pluralité de couches en matière plastique, comprenant
un coeur de carte (9) composé d'au moins une couche noyau (60, 61, 62), au moins deux couches de recouvrement (80, 81) destinées à recouvrir les deux surfaces du coeur de carte (9), et
éventuellement au moins une couche intermédiaire (70, 71) entre le coeur de carte (9) et au moins une des couches de recouvrement (80, 81),
dans lequel les couches en matière plastique sont laminées ensemble en une opération ou en plusieurs opérations,
**caractérisé en ce que**
en tant qu'au moins une des couches de recouvrement (80, 81) et/ou en tant qu'au moins une couche intermédiaire (70, 71), un matériau composite en feuille (4) tel qu'indiqué à la revendication 1 est utilisé,
cependant que le matériau composite en feuille (4) peut être obtenu suivant un procédé comportant une coextrusion
d'au moins un premier matériau en matière plastique de couche extérieure,
d'au moins un deuxième matériau en matière plastique de couche extérieure, et
d'au moins un matériau en matière plastique de couche intérieure, cependant que tous les matériaux en matière plastique sont, à l'état fondu, joints de telle façon avant leur sortie de la buse d'extrusion qu'un matériau composite en feuille (4) est extrudé, dans lequel une couche intérieure en matière plastique (3) est recouverte des deux côtés par une première (1) et une deuxième (2) couche extérieure en matière plastique,
qu'au moins un premier matériau en matière plastique de couche extérieure présente une composition telle qu'indiqué à une des revendications 1 ou 4 à 6,
qu'au moins un deuxième matériau en matière plastique de couche extérieure présente une composition telle qu'indiqué à une des revendications 1 ou 4 à 6, et
qu'au moins un matériau en matière plastique de couche intérieure présente une composition telle qu'indiqué à la revendication 1 ou 4.

11. Procédé selon la revendication 10, **caractérisé en ce que** la coextrusion est effectuée à une température de buse comprise entre 210° et 260°.

12. Procédé selon la revendication 10 ou 11, **caractérisé en ce que** les débits d'extrusion sont réglés de telle manière qu'un matériau composite en feuille (4) est coextrudé, dans lequel l'épaisseur de la couche intérieure (3) représente entre 40° et 80° de l'épaisseur du matériau composite en feuille (4).

13. Procédé selon une des revendications de 10 à 12, **caractérisé en ce que** le laminage est effectué à une température comprise entre 120° et 200°, ou entre 130° et 140°.
